# EUROPEAN PATENT APPLICATION

(11) **EP 2 107 617 A1**
(43) Date of publication of application: **07.10.2009**
(21) Application number: 08425215.4
(22) Date of filing: 03.04.2008
(51) Int. Cl.: H01L 31/042, H01L 31/048, E04H 6/02

(54) **Architectural covering with photovoltaic modules**

(71) Applicant: MAGN-Ethic S.r.l., 16145 Genova (IT)
(72) Inventor: Gandus, Michele, c/o MAGN-Ethic S.r.l., 16145 Genova (IT)
(74) Representative: Ferroni, Filippo

(57) **Abstract**

The invention relates to an architectural covering for building structures such as cantilever roofs, gazeboes and the like, wherein photovoltaic panels (2) are supported by a load-bearing structure (4-10) lying on the ground and consisting of a number of beams and posts. (6-11).

Advantageously, the photovoltaic panels (2) replace the roof of the structure, which thus can be particularly light and requires no particular foundation or other construction work.

According to a preferred embodiment, the covering also comprises an electronic control unit (35) which allows the electric current generated by the photovoltaic panels to be supplied in a controlled manner.

## Description

In general, the present invention relates to an architectural covering for outdoor environments, fitted with photovoltaic panels.

As known, exploiting alternative energy sources, in particular solar energy, is becoming increasingly important in the field of civil and industrial buildings and the like; in fact, many house roofs are already supporting photovoltaic modules or panels which supply electric power to appliances, mostly domestic ones, that require low power levels.

The spread of photovoltaic energy has lead to the discovery of new application possibilities: according to a more specific aspect, the present invention relates to structures such as cantilever roofs, gazeboes, sheds and the like, to be fitted with photovoltaic modules or panels.

In this frame, it should be pointed out that, in accordance with the industry practice, in the following description and in the appended claims the term "photovoltaic module" will refer to a laminar component generally consisting of an upper transparent plate (made of polycarbonate, glass or the like) and a support plate made of a suitable material (e.g. PVC coated with Tedlar® or other weather-resistant materials), between which a set of cells (usually 36 or 72) is arranged.

In practical implementations, two or more of these modules are assembled together in order to form a larger panel; to this end, in addition to being supported rigidly in the panel configuration, the modules are also connected electrically to one another in order to obtain the required voltage and/or current values.

However, in this description and in the appended claims the term "module" will also refer to large laminar units (a few metres long) made up of thin layers of amorphous silicon, as will be described in detail later on.

The term "module" thus appears to be less limiting, and therefore the following description and claims shall also apply to panels consisting of two or more assembled modules because the meaning of this term is compatible with the context.

Proceeding now with the examination of the current state of the art, all known applications of the aforementioned modules rely on covering existing terraces, roofs, sheds and the like, since this is the simplest and cheapest solution available: in fact, the modules can be installed by simply securing them to roofs, sheds or other existing surfaces, without requiring any installation costs in addition to the cost of the modules themselves.

However, this situation inevitably implies a low efficiency of the photovoltaic systems, due to the fact that the buildings on which the modules are laid, are not conceived expressly for this purpose.

For example, the orientation of the panels is not always optimal if we consider the solar radiation variations in the different seasons of the year; furthermore, the electric energy produced is often limited to domestic use, because the systems are rather small and have not been conceived for alternative applications.

The present invention aims at improving this state of the art: that is, it aims at providing an architectural covering for outdoor environments specially designed for photovoltaic modules and panels, so as to obtain higher energetic efficiency and to increase the number of possible applications of said modules and panels, as well as of the structure itself.

This object is achieved by means of a covering structure incorporating the features set out in the appended claims.

Said features, the advantageous effects deriving therefrom and other advantages provided by the invention will become more apparent from the following description referring to a non-limiting preferred embodiment illustrated in the annexed drawings, wherein:
Fig. 1 is a perspective view of a cantilever roof according to the invention;

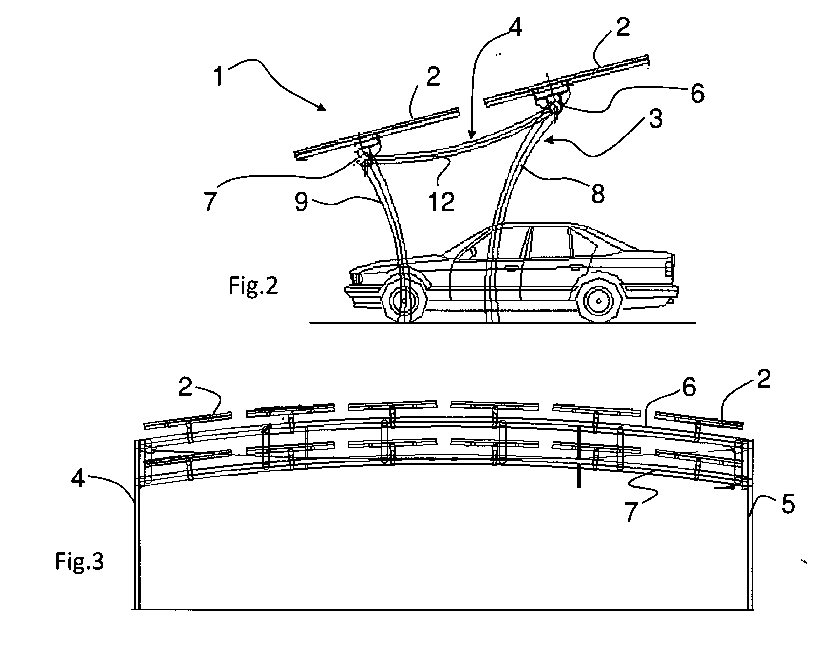

Fig. 2 is a side view of the cantilever roof of the preceding Figure;
Fig. 3 is a front view of the cantilever roof of Fig. 1;
Fig. 4 is a bottom view of the cantilever roof of Fig. 1;
Figs. 5 and 6 show a bottom view and a top view, respectively, of a photovoltaic panel of the preceding cantilever roof;

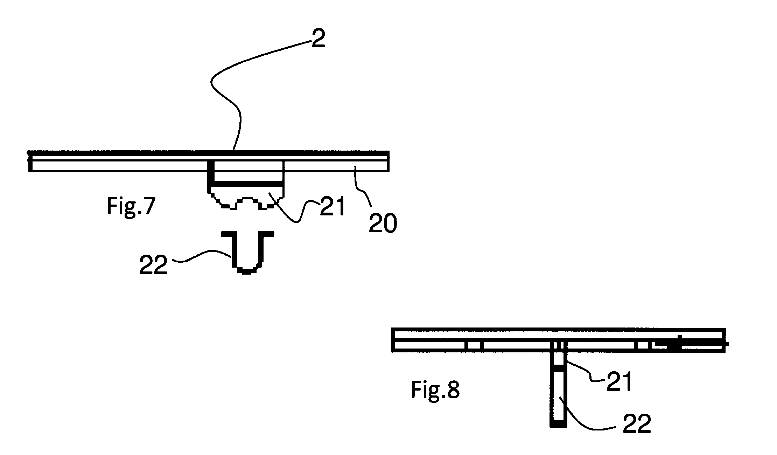

Figs. 7 and 8 are side views of the photovoltaic panel of Figs. 5 and 6;
Fig. 9 is a diagram of the electric energy supply system of the preceding cantilever roof;
Figs. 10 and 11 show respective variants of the cantilever roof according to the invention.

Referring now to the drawings, reference numeral 1 designates as a whole a cantilever roof according to the present invention.

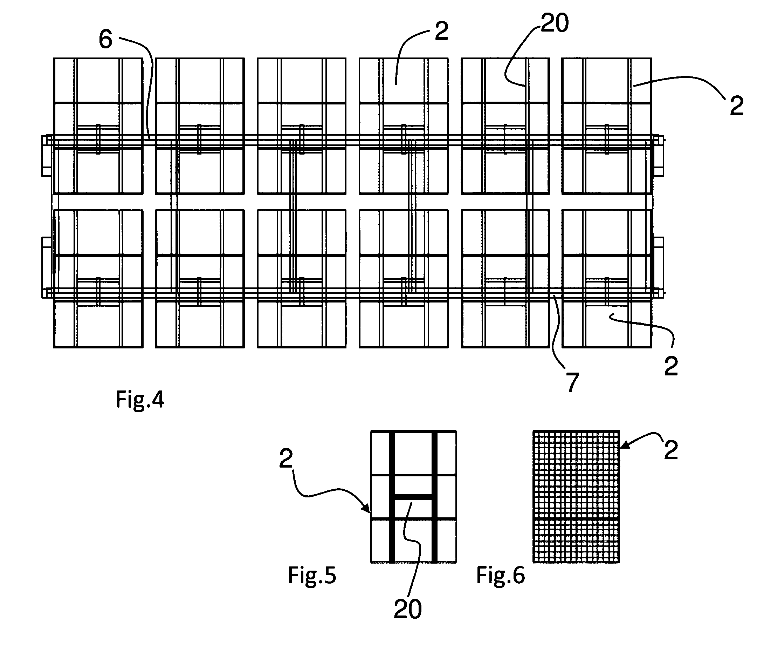

Cantilever roof 1 comprises a plurality of photovoltaic panels 2, each consisting of three modules 2a, 2b, 2c, as shown in Figs. 5 and 6, which are connected together structurally and electrically in a per se known manner.

As shown in the drawings, panels 2 make up the covering of the cantilever roof; in this example, they are mounted on a portal-type support structure, formed by two side abutment structures 4 and 5 joined by a pair of span camber beams 6, 7 extending on the upper part of the entire extent of the portal.

Each side abutment structure 4 and 5 in turn comprises pairs of pillars 8, 9 and 10, 11 joined by a horizontal crossbeam 12, 13; as shown in the drawings, in this example both the pillars and the crossbeam are slightly curved, just like the camber beams 6, 7.

In cantilever roof 1, photovoltaic panels 2 are mounted on the span beams 6, 7 in an adjustable manner, i.e. with the possibility of adjusting the inclination thereof according to solar radiation; for this purpose, panels 2 have, on the lower face, an H-shaped support structure 20 comprising a rest element 21 shaped as the tubular profile of the camber beams 6, 7, to which it is secured through a bracket 22 fastened with screws (not shown in the drawings).

Of course, any other adjustable panel fastening system may be used as a substitute for the above-described one; this will depend on design choices related to costs, shape of the beams 6, 7, and the like.

Thus, for example, bracket 22 and rest 21 may be replaced with gyroscopic joints (i.e. spider joints) associated with nut-screw mechanisms allowing the panel orientation to be adjusted; furthermore in more costly applications, motorized adjustment systems powered by the energy supplied by the photovoltaic panels may also be used.

In this example, the panels are all of the same size, and the matrix arrangement thereof is regular as well, i.e. the panels are spaced evenly at a preset distance, so as to make up a covering that lets through a certain quantity of light, and also allowing air to pass along the space between the panels.

However, thanks to the adjustability of the panels, different covering configurations may be obtained, as will be described later on.

The photovoltaic portion of each panel 2 is made up of three glass-tedlar modules 2a, 2b, 2c, each comprising seventy-two 125x125mm polycrystalline EWT cells, delivering a peak power of 170 W at a voltage of 42.9 V; each module has preferred dimensions of 810 mm x 1620 mm, with a thickness of 50 mm.

Cantilever roof 1 comprises a control unit 30, housed in a cabinet 31 of the type generally used in outdoor environments for containing electric equipment, telephonic equipment or the like.

The control unit receives electric energy from panels 2, to which it is connected by means of known cables (not shown in the drawings), even though it may also be provided with batteries (not shown) arranged inside cabinet 31.

The control unit is a PLC type electronic computer provided with per se known means (processor, interfaces, network cards, etc.) in order to control the supply of the electric current generated by photovoltaic panels 2 to a number of user devices available in the cantilever roof; in this case, said user devices are power sockets 35 and luminous panels 36.

According to a preferred embodiment, the electric energy supply is of the type wherein user utilities are identified via radio frequency (RFID); systems of this type are already available on the market, like the one manufactured by company TAG Italia.

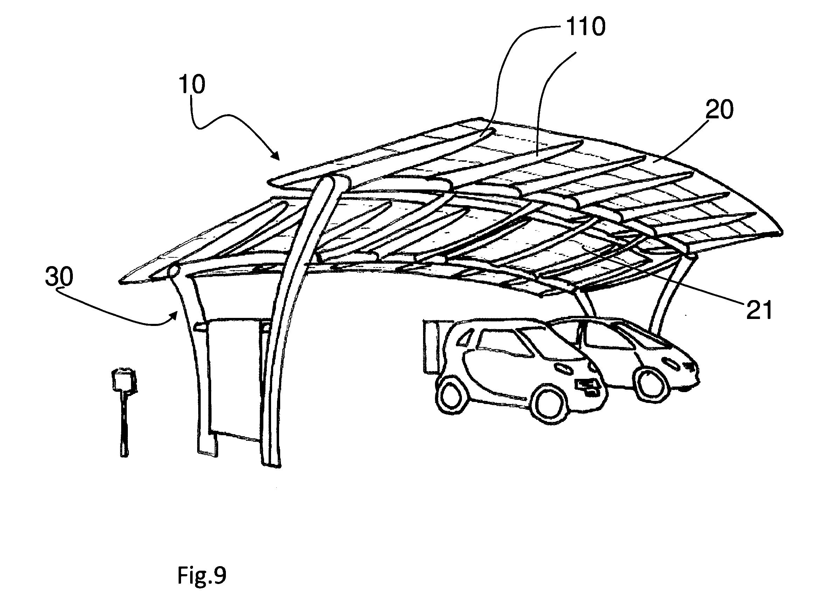

Electric current is supplied according to the diagram of Fig. 9.

As shown, power socket 35 is prearranged for being coupled to plug 37 fitted with a known passive TAG device 38 (e.g. an integrated circuit); information is stored within TAG device 38 which allows the system to accurately identify every single user who requires the service by connecting thereto.

An RFID reader 39 installed in power socket 35 is connected to a control unit 30 through a normal wired line 40 incorporated into the cantilever roof (not shown in the other drawings): when plug 37 is inserted into the power socket 35, reader 39 identifies the user through the code stored in tag 38 and, when authorized, it activates control unit 30, which can manage the current supply by calculating the delivered quantity, in view of charging the user for the service provided.

To this end, line 40 is connected (through a LAN, WAN or other network) to a remote operating unit 41 which manages the power supply service.

It can be appreciated that said supply takes place in conditions of utmost safety, because the electric energy produced by photovoltaic panels 2 is supplied only if user's tag 38 is positively identified, so that power socket 35 will remain powerless if an unauthorized person tries to insert a plug having no TAG.

It should be pointed out that cantilever roof 1 also comprises per se known means 43 (such as converters, rectifiers, transformers, etc.) for processing the electric current generated by panels 2 in order to obtain the intensity (Ampere) and voltage (Volt) values required for its delivery through power sockets 35.

It should be noted that said means, controlled by unit 30, may also adjust current voltage and intensity parameters by taking into account the variability of the electric energy produced by the photovoltaic panels, which is due to the different solar radiation occurring in the course of the day.

According to the same principle, the energy produced by the panels also supplies luminous panels 36, though for simplicity's sake the latter are not shown in Fig. 9.

It is apparent from the above explanation that cantilever roof 1 fully achieves the objects of the invention.

In fact, it is a covering which has been specially conceived for supporting photovoltaic panels, unlike the house roofs and the cantilever roof where the panels are laid on pre-existing coverings.

Therefore, cantilever roof 1 has no actual roof, shed or similar covering elements supporting panels 2, since the panels themselves provide the covering function; it follows that all the load-bearing structure consisting of abutment structures 4, 5 and span beams 6, 7 can be lighter, because it must not bear the weight of a roof over which the panels are laid, resulting in evident cost advantages.

For the very same reasons, also the foundations and any other construction works can be simpler and lighter.

Furthermore, a light load-bearing structure can be installed in a relatively simple manner and be oriented at best with respect to the sun; it also simplifies the installation and maintenance of the photovoltaic systems, in that the covering is arranged near the ground and can be easily accessed for installation, inspection and maintenance, resulting in much lower costs compared to installations carried out on building roofs.

Neither should one disregard the fact that control and protection boards, transformation inverters and any communication systems are all placed within watertight cabinet 31 located at the base of the structure, thus cutting down installation costs and avoiding any dispersion on the direct current (DC) side of the system, in addition to allowing the electric system to be monitored and maintained very easily.

In this frame, the curved shape of beams 6, 7 contributes to providing optimal exposure of panels 2 to solar radiation, since it allows to attain a better orientation of the panels along the trajectory of the solar disc without them mutually shadowing one another.

All these features allow the architectural covering according to the invention to be installed in places which are geographically located at much different latitudes (i.e. where solar rays have a different inclination), without any significant variations in the energetic efficiency of the panels.

In other words, the particular configuration of the load-bearing structure and the possibility of adjusting the orientation of the panels allow to compensate for the lower solar radiation in northern areas; for example, think of the differences which are found in Italy between Alpine areas and southern regions.

Thanks to this adjustability, the covering according to the invention can be manufactured industrially on a large scale, since it is a product which is suitable for many applications.

Finally, it should be underlined that the presence of control unit 30 considerably increases the application possibilities of the cantilever roof; in fact, in addition to being used as a cover for people or objects, it also becomes a recharge station for electric vehicles (the socalled ZEVs or Zero Emission Vehicles), as shown in the drawings.

In other words, the covering according to the invention allows to profitably use existing vehicle parking areas while providing an effective and useful shelter.

The presence of electric power sockets fitted with protections and with an automatic activation system featuring RFID recognition of authorized users allows to provide a means for connecting to the electric network in public and/or private areas in order to recharge electric vehicles and supply electric power to local markets and the like.

This concept can be expanded even further by saying that the covering may also be fitted with audio and video systems (screens for displaying images, etc., in addition to luminous panels 36) networked with public services such as traffic information, weather forecasts, social announcements or other information services.

These systems operate by using, partly or exclusively, the electric energy supplied by the solar panels, so that cantilever roof 1 is substantially independent from external electric networks.

A further application which may be implemented by cantilever roof 1 is powering lighting micro-networks or technologic systems (air quality monitoring units, video surveillance systems, radio links, GSM-UMTS networks or wireless repeaters).

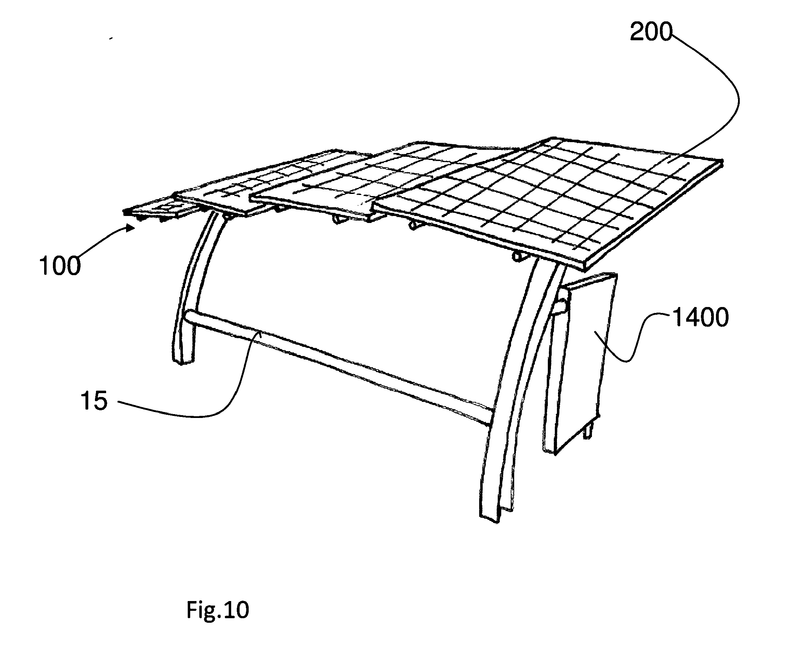

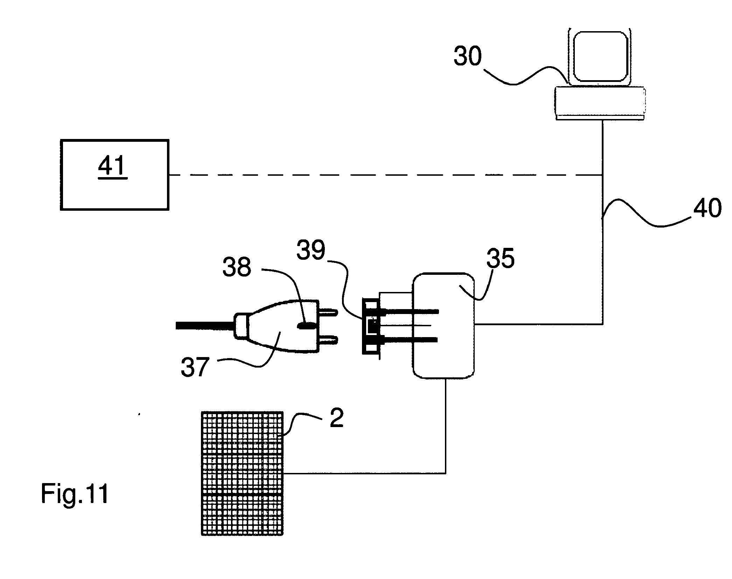

Of course, many variants of the cantilever roof described in the above example are also possible; Figs. 10 and 11 show two of these variants.

In Fig. 10, the cantilever roof parts which are structurally or functionally equivalent to the ones described above are designated by the same reference numerals followed by an apostrophe.

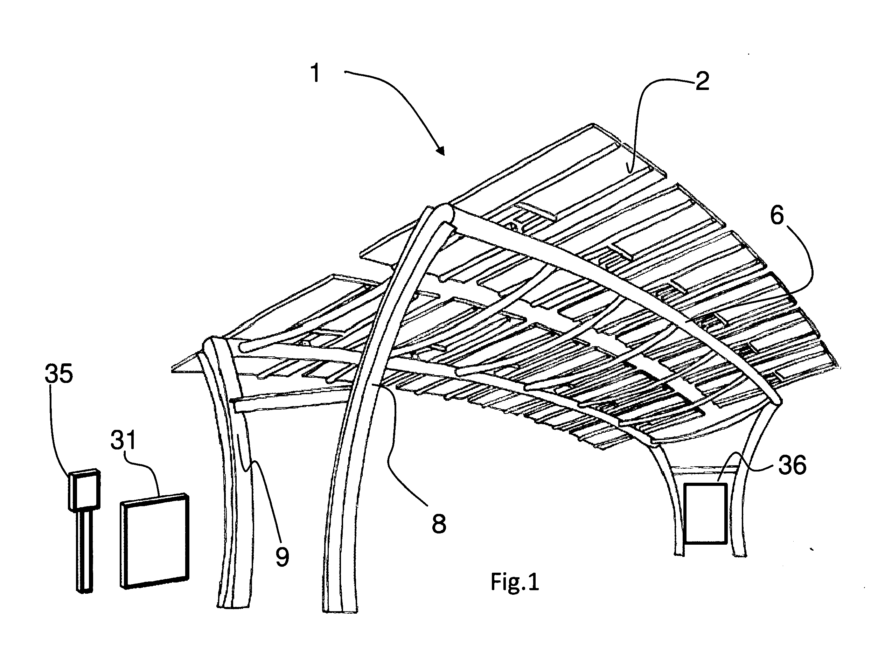

In this case, cantilever roof 1' has only two modules 2' consisting of respective Unisolar type photovoltaic sheets, manufactured by company ECD Ovonics, arranged on a support structure which is substantially similar to the one shown in Fig. 1; the modules are mounted on beams 6', 7' through supports 20' provided on the underside thereof.

Photovoltaic sheets 2' are preferably made of amorphous silicon, and allow to obtain continuous coverings ensuring optimal weather protection, which are inclined by about 10° relative to a horizontal plane.

In this case, said supports correspond to the arms of the "H" shape of the supports of the previous example, whereas beams 6, 7' correspond to the central segment of the "H".

The functions of the cantilever roof are nonetheless the same as those described above, except that the orientation of photovoltaic panels 2' can be adjusted by turning supports 20' about beams 6', 7'.

In this case as well, panels 2' are separated by a space that allows them both to be turned without interference and to offer less resistance to the wind, which can blow through the space between two panels.

An advantage offered by this cantilever roof variant over the first one is that the presence of two continuous panels 2' ensures better protection against solar rays and rain in the underlying area.

The same considerations also apply to the second cantilever roof variant, shown in Fig. 11, wherein those parts being structurally or functionally equivalent to those previously described are designated by the same reference numerals followed by two apostrophes.

As shown, cantilever roof 1" is smaller than the previous ones and comprises four photovoltaic panels 2" arranged on a single camber beam 6"; the side abutment structures consist of respective curved beams 8" and 10" connected together by a section 45 that accommodates the electric power sockets 35".

This cantilever roof therefore is differentiated from the other ones in that electric power sockets 35" are not arranged on small columns as in the previous cases, but on section 45, which is also used as a structure stiffening element.

This solution is therefore particularly suitable for small structures wherein the distance between the side abutment structures is not very long, so that quite short sections 45 can be used.

Photovoltaic panels 2" are similar to those of Figs. 5, 6, and are mounted in the same manner, with the H-shaped support 20" secured to the camber beam (not shown in Fig. 11); thus, cantilever roof 1" has a light multifunctional structure as well, in which panels 2", besides supplying electric energy, are also used as a covering without having to be laid over roofs or other existing surfaces.

As previously described in regard to the above examples, all of which referred to cantilever roofs, the photovoltaic-panel covering structure according to the invention can be implemented in multiple configurations.

It may therefore also be used for applications other than vehicle parking, such as public transport shelters, gazeboes and the like; within the scope of said applications, further variants may then be conceived in addition to the above-described embodiments.

For example, the above-described "portal" configuration may be changed to a "tree" configuration wherein the panels are laid on branches departing from a central column; this and other equivalent variants will however still fall within the scope of the appended claims.

## Claims

1. Architectural covering for outdoor environments, **characterized by** comprising a plurality of photovoltaic modules (2a, 2b, 2c; 2'; 2") supported by a load-bearing structure (4-10; 4'-10'; 4"-6").

2. Covering according to claim 1, wherein the load-bearing structure (4-10; 4'-10'; 4"-6") lies on the ground and comprises beams (6, 7; 6', 7'; 6") on which the photovoltaic modules (2a, 2b, 2c; 2'; 2") are arranged.

3. Covering according to claim 1 or 2, comprising means (30, 31, 35; 30', 31', 35'; 30", 31", 35") for supplying the electric energy produced by the photovoltaic panels (2, 2', 2").

4. Covering according to claim 3, wherein the means for electric energy supply comprise a control unit (30) which allows authorized users to draw current.

5. Covering according to claim 4, wherein the electric energy supply is of the type with radio frequency identification (RFID).

6. Covering according to claim 5, comprising at least one power socket (35) fitted with an RFID reader (39) and prearranged for being coupled to a plug (37) fitted with a TAG device (38).

7. Covering according to claim 6, wherein the RFID reader (39) of the power socket (35) is connected to the control unit (30) through a line (40) associated with the support structure (4-10; 4'-10'; 4"-6") of the panels (2; 2'; 2").

8. Covering according to any of the preceding claims, wherein the line (40) associated with the structure is connected to a remote operational unit (41) through a LAN/WAN network.

9. Covering according to any of the preceding claims, comprising means (43) such as rectifiers, converters and the like for processing the electric energy supplied by the photovoltaic modules.

10. Covering according to any of the preceding claims, comprising a cabinet (31) housing the control unit (30), located in adjacency to the load-bearing structure (4-10; 4'-10'; 4"-6") that supports the photovoltaic modules.

11. Covering according to any of the preceding claims, wherein the photovoltaic modules (2; 2'; 2") are mounted on the load-bearing structure (4-10; 4'-10'; 4"-6") in an adjustable manner.

12. Covering according to claim 11, wherein the photovoltaic modules (2, 2', 2") are arranged on a support (20; 20'; 20") having substantially an "H" shape, which is secured to a beam (6, 7; 6', 7'; 6") in an adjustable manner.

13. Covering according to any of the preceding claims, wherein the structure has a portal configuration, with side abutment structures (4, 5; 4', 5'; 8', 10') supporting a span beam (6, 7; 6', 7'; 6") extending over the entire extent of the portal.

14. Covering according to claim 13, wherein the modules (2; 2'; 2") are arranged on the span beam (6, 7; 6', 7'; 6"), which is an arched one.

15. Covering according to claim 13 or 14, comprising a section (45) on which the electric power sockets (35") are installed.

16. Covering according to the preceding claim, wherein the section (45) extends between the side abutment structures (8", 10") of the structure that supports the modules.

17. Covering according to any of the preceding claims, wherein the photovoltaic modules (2a, 2b, 2c) are joined together to form panels (2) supported by the structure.

18. Covering according to any one of claims 1 to 17, wherein the modules (2') comprise a laminar support coated with a photovoltaic layer made of amorphous silicon, and cover the whole load-bearing structure (4'-10').

19. Cantilever roof **characterized by** comprising a covering according to any of the preceding claims.
